# EUROPEAN PATENT APPLICATION

(11) **EP 3 910 697 A1**
(43) Date of publication of application: **17.11.2021**
(21) Application number: 20799596.0
(22) Date of filing: 03.04.2020

(54) **CELL ISOLATION SLEEVE AND BATTERY MODULE**

(30) Priority: 02.04.2020 CN 202010255002
(71) Applicant: Sunwoda Electric Vehicle Battery Co., Ltd., Shenzhen, Guangdong 518000 (CN)
(72) Inventor: CHENG, Zhigang, Shenzhen, Guangdong 518000 (CN); WANG, Tianfu, Shenzhen, Guangdong 518000 (CN); HUA, Huangwei, Shenzhen, Guangdong 518000 (CN); WEI, Ruihong, Shenzhen, Guangdong 518000 (CN)
(74) Representative: Ostriga Sonnet Wirths & Vorwerk
(86) International application number: PCT/CN2020/083298
(87) International publication number: WO 2021/196200

(57) **Abstract**

The invention relates to the field of power battery technologies, and more particularly, to a cell isolation sleeve and a battery module. A left connecting edge and a right connecting edge of the cell isolation sleeve are respectively provided with a first vertical hole and a second vertical hole, water drops which spread to the left connecting edge and the right connecting edge from a side surface of a cell will aggregate in the first vertical hole and the second vertical hole, thus preventing the water drops from spreading continuously. Moreover, due to an action of gravity, the water drops will fall off after aggregating to a certain size, thus solving a problem that the water drops on the side surface of the cell are likely to flow into the battery module through the cell isolation sleeve, resulting in dangerous phenomena such as electric leakage, short circuit, fire and explosion, and the like of the battery module.

## Description

### FIELD

The present invention relates to the field of power battery technologies, and more particularly, to a cell isolation sleeve and a battery module.

### BACKGROUND

When a battery module is in a low temperature environment, moisture in air may condense on a side surface of a cell. It can be known from a capillary phenomenon that condensed water may slowly spread upwardly along the side surface of the cell, and water drops may be larger with aggregation. The water drops are likely to flow into the battery module through a cell isolation sleeve, resulting in dangerous phenomena such as electric leakage, short circuit, fire and explosion, and the like of the battery module.

### SUMMARY

Aiming at the defects in the existing technologies, the present invention proposes a cell isolation sleeve and a battery module, and is intended to solve a problem that water drops on a side surface of a cell are likely to flow into the battery module through the cell isolation sleeve, resulting in dangerous phenomena such as electric leakage, short circuit, fire and explosion, and the like of the battery module.

The present invention proposes the technical solutions as follows.

There is provided a cell isolation sleeve configured to be arranged between two cells, the cell isolation sleeve is provided with a left connecting edge and a right connecting edge, the left connecting edge is provided with a first vertical hole, and the right connecting edge is provided with a second vertical hole.

Further, the cell isolation sleeve is provided with a lower connecting edge, a left end of the lower connecting edge is connected to a lower end of the left connecting edge, a right end of the lower connecting edge is connected to a lower end of the right connecting edge, a left wrap angle is formed at a junction between the left end of the lower connecting edge and the lower end of the left connecting edge, a right wrap angle is formed at a junction between the right end of the lower connecting edge and the lower end of the right connecting edge, the left wrap angle is provided with a first through hole, and the right wrap angle is provided with a second through hole.

Further, the lower connecting edge is provided with a third through hole.

Further, the cell isolation sleeve is provided with an upper connecting edge, a left end of the upper connecting edge is connected to an upper end of the left connecting edge, the right end of the lower connecting edge is connected to an upper end of the right connecting edge, a lower side wall of the upper connecting edge is provided with an upper partition plate configured for dividing a space in the cell isolation sleeve into a cell mounting space and a cell stacking space.

Further, the first vertical hole is communicated with the cell mounting space and the cell stacking space respectively, and the second vertical hole is communicated with the cell mounting space and the cell stacking space respectively.

Further, an upper side wall of the lower connecting edge is provided with a lower partition plate corresponding to the upper partition plate in a vertical direction.

Further, inner and outer side walls of the upper partition plate are both provided with a sealing strip.

Further, the left wrap angle is provided with a first bump, the first bump is located in the first through hole, the right wrap angle is provided with a second bump, and the second bump is located in the second through hole.

The present invention further provides a battery module, which includes at least two cells, wherein the above cell isolation sleeve is arranged between every two cells.

Further, the battery module further includes an upper cover, the upper cover is arranged on the at least two cells, a lower side wall of the upper cover is provided with two rows of reinforcing ribs which are juxtaposed left and right, each row of reinforcing ribs include a plurality of reinforcing ribs, and foam is arranged between every two reinforcing ribs.

According to the above technical solutions, the present invention has the beneficial effects as follows. By providing the left connecting edge and the right connecting edge of the cell isolation sleeve respectively with the first vertical hole and the second vertical hole, water drops which spread to the left connecting edge and the right connecting edge from a side surface of a cell will aggregate in the first vertical hole and the second vertical hole, thus preventing the water drops from spreading continuously. Moreover, due to an action of gravity, the water drops will fall off after aggregating to a certain size, thus solving a problem that the water drops on the side surface of the cell are likely to flow into the battery module through the cell isolation sleeve, resulting in dangerous phenomena such as electric leakage, short circuit, fire and explosion, and the like of the battery module.

### BRIEF DESCRIPTION OF THE DRAWINGS

FIG. 1 is a structure diagram of a cell isolation sleeve according to an embodiment of the present invention;
FIG. 2 is a structure diagram of a cell isolation sleeve according to another embodiment of the present invention;
FIG. 3 is a structure diagram of a cell isolation sleeve according to another embodiment of the present invention;
FIG. 4 is a structure diagram of a battery module according to an embodiment of the present invention; and
FIG. 5 is a structure diagram of an upper cover according to an embodiment of the present invention.

### DETAILED DESCRIPTION OF THE EMBODIMENTS

To make the objectives, the technical solutions, and the advantages of the present invention clearer, the present invention is further described in detail hereinafter with reference to the accompanying drawings and the embodiments. It should be understood that the specific embodiments described herein are only used for explaining the present invention and are not intended to limit the present invention.

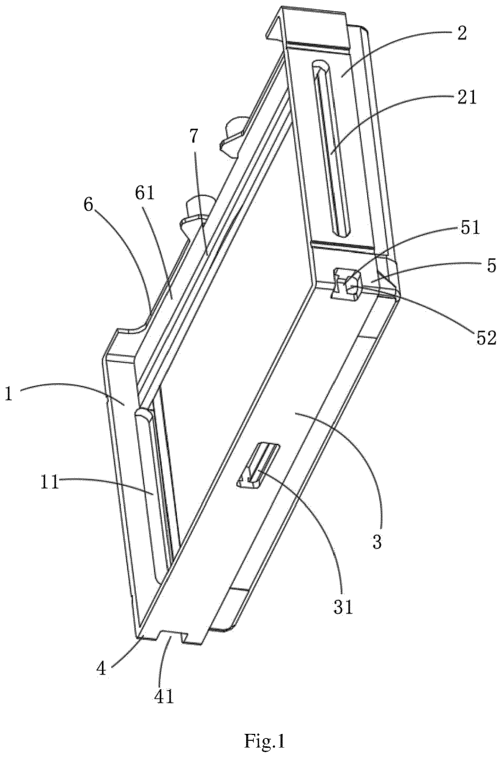

As shown in FIG. 1, according to an embodiment of the present invention, a cell isolation sleeve is proposed which is configured to be arranged between two cells. The cell isolation sleeve is provided with a left connecting edge 1 and a right connecting edge 2, the left connecting edge 1 is provided with a first vertical hole 11, and the right connecting edge 2 is provided with a second vertical hole 21.

By providing the left connecting edge 1 and the right connecting edge 2 of the cell isolation sleeve respectively with the first vertical hole 11 and the second vertical hole 21, water drops which spread to the left connecting edge 1 and the right connecting edge 2 from a side surface of a cell will aggregate in the first vertical hole 11 and the second vertical hole 21, thus preventing the water drops from spreading continuously. Moreover, due to an action of gravity, the water drops will fall off after aggregating to a certain size, thus solving a problem that the water drops on the side surface of the cell are likely to flow into the battery module through the cell isolation sleeve, resulting in dangerous phenomena such as electric leakage, short circuit, fire and explosion, and the like of the battery module.

In some embodiments, a plurality of first vertical holes 11 and a plurality of second vertical holes 21 are provided, which means that the left connecting edge 1 is provided with a plurality of first vertical holes 11, and the right connecting edge 2 is provided with a plurality of second vertical holes 21. In this way, probability that the water drops aggregate in the first vertical hole 11 and the second vertical hole 21 can be increased, thus increasing a safety factor of the battery module.

In the embodiment, each of a left side wall of the left connecting edge 1 and a right side wall of the right connecting edge 2 is configured for being connected to a side plate. Glue is arranged on the left side wall of the left connecting edge 1 and the right side wall of the right connecting edge 2, and the left side wall of the left connecting edge 1 and the right side wall of the right connecting edge 2 are respectively adhered to the side plate through the glue.

In the embodiment, the cell isolation sleeve is provided with a lower connecting edge 3, a left end of the lower connecting edge 3 is connected to a lower end of the left connecting edge 1, and a right end of the lower connecting edge 3 is connected to a lower end of the right connecting edge 2. A left wrap angle 4 is formed at a junction between the left end of the lower connecting edge 3 and the lower end of the left connecting edge 1, and a right wrap angle 5 is formed at a junction between the right end of the lower connecting edge 3 and the lower end of the right connecting edge 2. The left wrap angle 4 is provided with a first through hole 41, and the right wrap angle 5 is provided with a second through hole 51. The glue on the left side wall of the left connecting edge 1 and the right side wall of the right connecting edge 2 flows down to the left wrap angle 4 and the right wrap angle 5 respectively, so that the glue enters the first through hole 41 and the second through hole 51, thus adhering the cell to the left wrap angle 4 and the right wrap angle 5, and forming a sealing structure at the left wrap angle 4 and the right wrap angle 5, with the following effects: 1. a spreading path of the water drops is blocked; 2. during later operation of the battery module, a blue film at a corner of the cell is prevented from being rubbed against the cell isolation sleeve, thus reducing a possibility that the blue film at the corner of the cell is broken; 3. liquid leakage can be prevented even if the cell is broken at the corner.

In the embodiment, the lower connecting edge 3 is provided with a third through hole 31. The water drops at a bottom of the cell are able to be discharged through the third through hole 31. The third through hole 31 prevents the condensed water drops from spreading at the bottom of the cell. When the condensed water drops aggregate in the third through hole 31 at a bottom of the cell isolation sleeve, the condensed water drops may fall into the third through hole 31, thus being discharged from the battery module.

In the embodiment, the cell isolation sleeve is provided with an upper connecting edge 6, a left end of the upper connecting edge 6 is connected to an upper end of the left connecting edge 1, and the right end of the lower connecting edge 3 is connected to an upper end of the right connecting edge 2. A lower side wall of the upper connecting edge 6 is provided with an upper partition plate 61, and the upper partition plate 61 divides a space in the cell isolation sleeve into a cell mounting space and a cell stacking space. The cell mounting space is configured for mounting one cell, and the cell stacking space is configured for abutting against another cell during stacking.

In the embodiment, the first vertical hole 11 is communicated with the cell mounting space and the cell stacking space respectively, and the second vertical hole 21 is communicated with the cell mounting space and the cell stacking space respectively. Through the communication of the first vertical hole 11 with both of the cell mounting space and the cell stacking space, and the communication of the second vertical hole 21 with both of the cell mounting space and the cell stacking space, the water drops can be aggregated on the cell mounted in the cell mounting space and the cell stacked in the cell stacking space through the first vertical hole 11 and/or the second vertical hole 21.

In the embodiment, an upper side wall of the lower connecting edge 3 is provided with a lower partition plate, and the lower partition plate corresponds to the upper partition plate 61 in a vertical direction, thus further separating the cell mounting space and the cell stacking space.

In the embodiment, inner and outer side walls of the upper partition plate 61 are both provided with a sealing strip 7. The inner and outer side walls of the upper partition plate 61 are both provided with a double-sided adhesive tape or glue, and the sealing strips 7 are adhered to the inner and outer side walls of the upper partition plate 61 through the double-sided adhesive tapes or glue. The sealing strip 7 divides the cell mounted in the cell isolation sleeve into a conductive area and an insulating area with the sealing strip 7 as a boundary. A distance between the sealing strip 7 and the upper connecting edge 6 is 0.5 mm to 15 mm.

The sealing strip 7 has a thickness of 0.5 mm to 5 mm, is attached with the double-sided adhesive tape on a back surface, and is fixed on the cell isolation sleeve by using a double-sided adhesiveness. By using compressibility of the sealing strip 7, the sealing strip 7 on a front surface of the cell isolation sleeve can be compressed so as to be attached closely to the cell for sealing under a pressure generated during fixation of the cell and the cell isolation sleeve, and the sealing strip 7 on a back surface of the cell isolation sleeve can be compressed so as to be attached closely to the cell for sealing under a pressure generated during stacking between the cell and the cell isolation sleeve. In this way, the battery module stacked into a group can be divided into the conductive area and the insulating area with the sealing strip 7 as the boundary. The conductive area is located above the sealing strip 7 and the insulating area is located below the sealing strip 7.

In the embodiment, the sealing strip 7 is made of an insulating compressible material, which may be a rubber strip or foam.

In some embodiments, inner and outer side walls of the upper partition plate 61 are both provided with a groove in which the sealing strip 7 is arranged. The sealing strip 7 is adhered in the groove, and the groove has a certain fixing effect on the sealing strip 7.

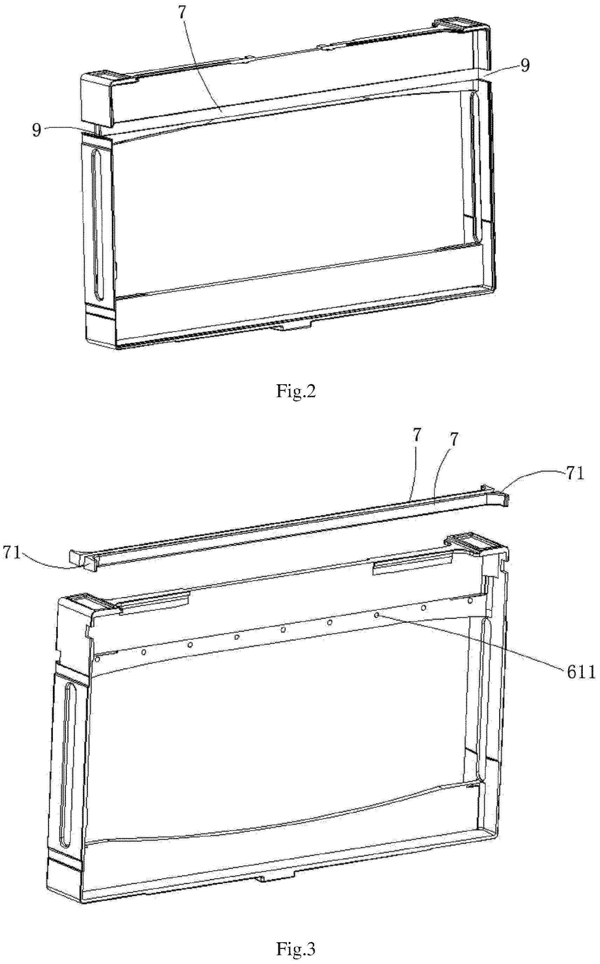

As shown in FIG. 2, in some embodiments, the left connecting edge 1 and the right connecting edge 2 are both provided with a notch 9, and the notch 9 is configured for positioning and fixing the sealing strip 7.

As shown in FIG. 3, in some embodiments, the inner and outer side walls of the upper partition plate 61 are both provided with the sealing strip 7, and both ends of the sealing strip 7 are provided with a folding block 71. One of the folding blocks is connected to the right side wall of the left connecting edge 1 and the other folding block 71 is connected to the left side wall of the right connecting edge 2 through the double-sided adhesive tape or glue.

As shown in FIG. 3, in some embodiments, the inner and outer side walls of the upper partition plate 61 are both provided with the sealing strip 7, the inner and outer side walls of the upper partition plate 61 are both provided with a positioning hole 611, and a side wall of the sealing strip 7 is provided with a protrusion matched with the positioning hole 611.

In some embodiments, the sealing strip 7 is integrally formed with the cell isolation sleeve.

In some embodiments, the sealing strip 7 is in a strip ring shape, the sealing strip 7 is sheathed on the cell isolation sleeve by using elastic deformation, and the sealing strip 7 is located on the upper partition plate 61.

In the embodiment, the left wrap angle 4 is provided with a first bump, and the first bump is located in the first through hole 41. The right wrap angle 5 is provided with a second bump 52, and the second bump 52 is located in the second through hole 51. The first bump and the second bump 52 have a function of blocking the glue, so that the glue stays in the first through hole 41 and the second through hole 51.

The present invention further provides a battery module, which includes at least two cells, wherein the above cell isolation sleeve is arranged between every two cells.

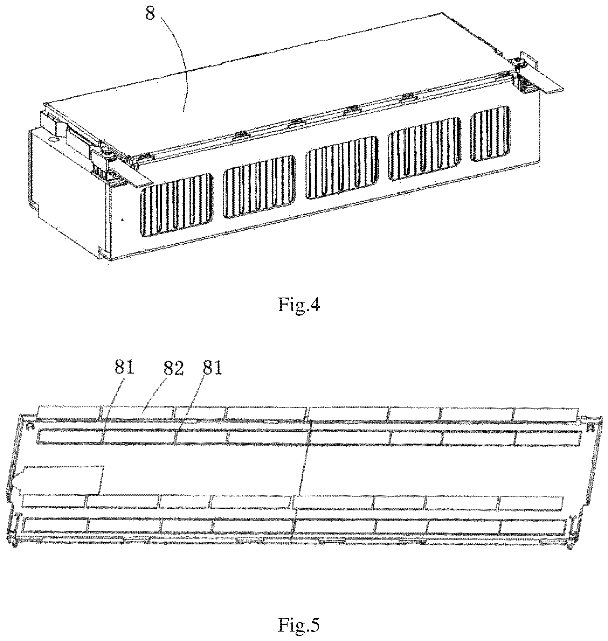

As shown in FIG. 4 and FIG. 5, in the embodiment, the battery module further includes an upper cover 8. The upper cover 8 is arranged above the at least two cells, a lower side wall of the upper cover 8 is provided with two parallel rows of reinforcing ribs, each row of reinforcing ribs include a plurality of reinforcing ribs 81, and foam 82 is arranged between every two reinforcing ribs 81. The foam 82 is able to prevent a capillary phenomenon in which the condensed water drops spread to a metal member such as a side plate, an end plate and the like through the upper cover 8.

Those described above are merely preferred embodiments of the present invention, but are not intended to limit the present invention. Any modifications, equivalent substitutions and improvements made without departing from the concept and principle of the present invention should all fall within the scope of protection of the present invention.

## Claims

1. A cell isolation sleeve, wherein the cell isolation sleeve is configured to be arranged between two cells, the cell isolation sleeve is provided with a left connecting edge and a right connecting edge, the left connecting edge is provided with a first vertical hole, and the right connecting edge is provided with a second vertical hole.

2. The cell isolation sleeve according to claim 1, wherein the cell isolation sleeve is provided with a lower connecting edge, a left end of the lower connecting edge is connected to a lower end of the left connecting edge, a right end of the lower connecting edge is connected to a lower end of the right connecting edge, a left wrap angle is formed at a junction between the left end of the lower connecting edge and the lower end of the left connecting edge, a right wrap angle is formed at a junction between the right end of the lower connecting edge and the lower end of the right connecting edge, the left wrap angle is provided with a first through hole, and the right wrap angle is provided with a second through hole.

3. The cell isolation sleeve according to claim 2, wherein the lower connecting edge is provided with a third through hole.

4. The cell isolation sleeve according to claim 2, wherein the cell isolation sleeve is provided with an upper connecting edge, a left end of the upper connecting edge is connected to an upper end of the left connecting edge, the right end of the lower connecting edge is connected to an upper end of the right connecting edge, a lower side wall of the upper connecting edge is provided with an upper partition plate configured for dividing a space in the cell isolation sleeve into a cell mounting space and a cell stacking space.

5. The cell isolation sleeve according to claim 4, wherein the first vertical hole is communicated with the cell mounting space and the cell stacking space respectively, and the second vertical hole is communicated with the cell mounting space and the cell stacking space respectively.

6. The cell isolation sleeve according to claim 4, wherein an upper side wall of the lower connecting edge is provided with a lower partition plate corresponding to the upper partition plate in a vertical direction.

7. The cell isolation sleeve according to claim 4, wherein inner and outer side walls of the upper partition plate are both provided with a sealing strip.

8. The cell isolation sleeve according to claim 2, wherein the left wrap angle is provided with a first bump, the first bump is located in the first through hole, the right wrap angle is provided with a second bump, and the second bump is located in the second through hole.

9. A battery module, comprising at least two cells, wherein the cell isolation sleeve according to any one of claims 1 to 8 is arranged between every two cells.

10. The cell isolation sleeve according to claim 9, wherein the battery module further comprises an upper cover, the upper cover is arranged over the at least two cells, a lower side wall of the upper cover is provided with two parallel rows of reinforcing ribs, each row of reinforcing ribs comprise a plurality of reinforcing ribs, and foam is arranged between every two reinforcing ribs.
